# DEMANDE DE BREVET EUROPEEN

(11) **EP 4 810 294 A1**
(43) Date de publication de la demande: **23.09.2026**
(21) Numéro de dépôt: 26155939.7
(22) Date de dépôt: 03.02.2026
(51) Int. Cl.: B60K 35/10, B60K 35/22, B60Q 1/34, B60Q 1/48, B60Q 1/50, B60W 30/06, B62D 15/02

(54) **PROCÉDÉ ET DISPOSITIF D' AIDE AU STATIONNEMENT D'UN VÉHICULE AUTONOME**

(30) Priorité: 21.03.2025 FR 2502949
(71) Demandeur: Stellantis Auto SAS, 78300 Poissy (FR); FCA US LLC, Auburn Hills, MI 48326-2766 (US)
(72) Inventeur: DESCHAMPS, VINCENT, 92240 Malakoff (FR); LENTI, FREDERIC, 91430 Vauhallan (FR)
(74) Mandataire: ESIP

(57) **Abrégé**

L'invention concerne un procédé et un dispositif d'aide au stationnement d'un premier véhicule, ce premier véhicule étant de type véhicule autonome et circulant sur une voie de circulation à une première vitesse, une voie de stationnement étant située d'un côté de la voie de circulation, ledit procédé étant mis en œuvre par un processeur et comportant les étapes de détermination d'une intention de stationnement du premier véhicule ; de détermination du côté de la voie de stationnement où une place de stationnement est à chercher ; d'activation d'un clignotant du premier véhicule du côté de la voie de stationnement déterminée ; de réduction de la première vitesse de circulation du premier véhicule.

## Description

### Domaine technique

L'invention est dans le domaine des systèmes d'aide à la conduite de véhicules autonomes. En particulier, l'invention concerne un procédé et un dispositif d'aide au stationnement d'un véhicule autonome.

### Arrière-plan technologique

Actuellement, lors du stationnement d'un véhicule autonome sur une place de stationnement dans un mode de stationnement de type « créneau », le véhicule autonome détecte une place de stationnement disponible, puis active le clignotant du côté de la place de stationnement, et ralentit pour s'immobiliser après la place de stationnement. De cette manière, le véhicule autonome prévient un véhicule suiveur de sa volonté de réaliser une manœuvre afin de se garer, et laisse un espace suffisant pour permettre de réaliser sa manœuvre de stationnement en créneau.

Le stationnement de type « créneau » consiste à garer un véhicule parallèlement à un trottoir, entre deux véhicules déjà stationnés, en reculant et en ajustant sa position dans l'espace libre entre les deux véhicules déjà stationnés.

Un véhicule suiveur peut ne pas avoir compris suffisamment à l'avance l'intention du véhicule autonome de se garer, et ne pas maintenir une distance suffisante entre le véhicule autonome et lui-même. Ainsi, lorsque le véhicule autonome s'immobilise avant de réaliser la manœuvre de stationnement en créneau, il ne dispose plus d'un espace suffisant pour réaliser une manœuvre de stationnement en créneau.

De plus, dans cette configuration, si un dépassement du véhicule autonome par le véhicule suiveur n'est pas possible, du fait de l'infrastructure, par exemple, dans le cas d'une rue à sens unique avec une seule voie de circulation, ou dans le cas d'une rue à double sens avec 2 voies de circulation, avec trafic dense ou bloqué sur la voie adjacente, ou si une manœuvre en marche arrière du véhicule suiveur n'est pas possible, par exemple, si un troisième véhicule est positionné derrière le véhicule suiveur, alors la situation sera bloquée et le véhicule autonome sera dans l'obligation de libérer la voie sans avoir pu réaliser sa manœuvre de stationnement en créneau.

Il existe donc un réel besoin pour aider au stationnement un véhicule autonome sur une place de stationnement dans un mode de stationnement de type « créneau ».

### Résumé de l'invention

Un objet de la présente invention est de remédier au problème précité, en particulier d'aider au stationnement d'un véhicule autonome sur une place de stationnement dans un mode de stationnement de type « créneau ».

A cet effet, l'invention concerne un procédé d'aide au stationnement d'un premier véhicule, ce premier véhicule étant de type véhicule autonome et circulant sur une voie de circulation à une première vitesse, une voie de stationnement étant située d'un côté de la voie de circulation, ledit procédé étant mis en œuvre par un processeur et comportant les étapes de :
a) Détermination d'une intention de stationnement du premier véhicule ;
b) Détermination du côté de la voie de stationnement où une place de stationnement est à chercher ;
c) Activation d'un clignotant du premier véhicule du côté de la voie de stationnement déterminée ;
d) Réduction de la première vitesse de circulation du premier véhicule.

Avantageusement, l'intention de stationnement du premier véhicule est déclenchée par une commande représentative de la volonté d'un utilisateur du véhicule.

Avantageusement, la commande représentative de la volonté d'un utilisateur du véhicule est de type commande sur une interface tactile ou commande vocale.

Avantageusement, le procédé comporte en outre les étapes suivantes :
- Détection d'une place de stationnement libre sur la voie de stationnement déterminée ;
- Rapprochement latéral du premier véhicule vers la voie de stationnement ;
- Immobilisation du premier véhicule en aval de la place de stationnement libre sur la voie de stationnement.

Avantageusement, l'étape c) d'activation d'un clignotant du premier véhicule est conditionnée à une présence d'un deuxième véhicule dit véhicule suiveur et/ou à la détection d'une place de stationnement libre sur la voie de stationnement déterminée.

Avantageusement, l'étape c) d'activation d'un clignotant du premier véhicule est conditionnée au fait que le deuxième véhicule ne peut pas dépasser le premier véhicule et/ou à la détection d'une place de stationnement libre sur la voie de stationnement déterminée.

L'invention concerne également un programme d'ordinateur comportant des instructions pour la mise en œuvre du procédé, lorsque ces instructions sont exécutées par un processeur.

L'invention concerne également un dispositif d'aide au stationnement d'un véhicule comprenant:
- un capteur frontal,
- un capteur arrière,
- une interface véhicule,
- une mémoire associée à un processeur configuré pour mettre en œuvre un tel procédé.

Avantageusement, le capteur frontal ou le capteur arrière est un capteur LIDAR ou une caméra ou un radar.

L'invention concerne également un véhicule comportant un tel dispositif.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre de façon schématique un environnement de circulation pour véhicules, selon un exemple de réalisation particulier de la présente invention ;
[Fig. 2] illustre schématiquement un organigramme des différentes étapes d'un procédé d'aide au stationnement d'un premier véhicule, selon un exemple de réalisation particulier de la présente invention.

### Description des exemples de réalisation

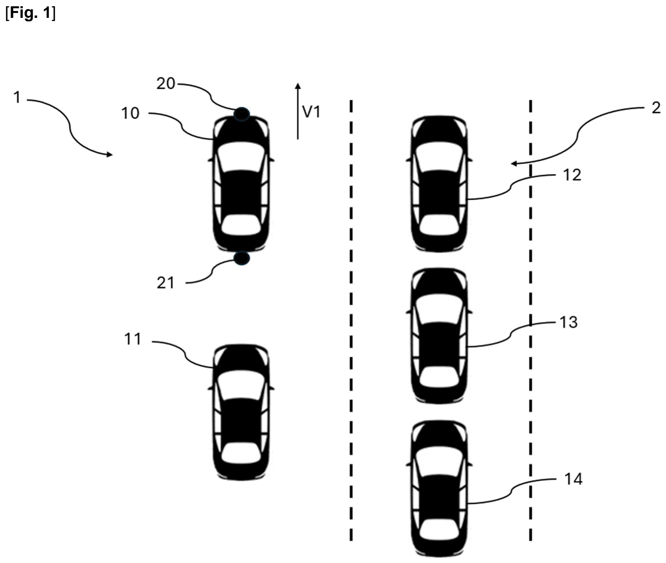

Un procédé et un dispositif d'aide au stationnement d'un premier véhicule vont maintenant être décrits dans ce qui va suivre en référence conjointement aux figures 1 à 2.

Selon un exemple particulier et non limitatif de réalisation de la présente invention, un procédé d'aide au stationnement d'un premier véhicule 10 est mis en œuvre.

La figure 1 illustre de façon schématique un environnement de circulation pour véhicules.

Le premier véhicule 10 circule dans un mode autonome ou semi-autonome, par exemple selon un niveau d'autonomie supérieur ou égal à 2 ou 3.

Ce premier véhicule 10 circule sur une voie de circulation 1, de type urbain ou semi urbain.

Ce premier véhicule 10 roule à une première vitesse V1.

Par exemple, la première vitesse V1 est comprise entre 30 et 50 km/h.

Une voie de stationnement 2 est située d'un côté de la voie de circulation 1, par exemple, du côté droit de la voie de circulation 1.

La voie de stationnement 2 est parallèle à la voie de circulation 1. La voie de stationnement 2 permet à plusieurs véhicules 12, 13, 14 de stationner en file indienne.

Par exemple, la voie de stationnement 2 comporte des marquages au sol permettant de délimiter les places de stationnement.

Les véhicules 12, 13, 14 peuvent être stationnés en file indienne sur la voie de stationnement 2.

Le premier véhicule 10 comporte un capteur qui permet de détecter les obstacles situés à l'avant du premier véhicule 10.

Ce capteur peut être un capteur frontal 20.

Par exemple, ce capteur frontal 20 est un capteur LIDAR ou une caméra ou un radar.

Le premier véhicule 10 comporte également un capteur qui permet de détecter les obstacles situés à l'arrière du premier véhicule 10.

Ce capteur peut être un capteur arrière 21.

Par exemple, ce capteur arrière 21 est un capteur LIDAR ou une caméra ou un radar.

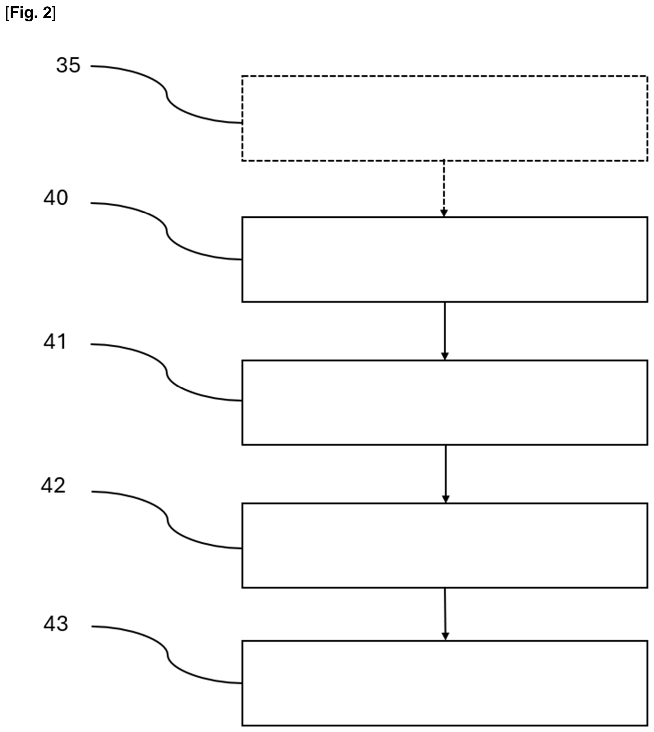

La figure 2 illustre schématiquement un organigramme des différentes étapes d'un procédé d'aide au stationnement d'un premier véhicule, selon un exemple de réalisation particulier de la présente invention.

Dans une première étape 40 du procédé, l'intention de stationnement du premier véhicule 10 est déterminée.

Le premier véhicule 10 peut comporter un système de navigation embarquée.

L'intention de stationnement du premier véhicule est par exemple déterminée par l'arrivée à la destination saisie dans le système de navigation embarquée du premier véhicule 10.

De cette manière, l'utilisateur n'a pas besoin d'intervenir pour faire connaitre l'intention de stationnement de son véhicule, ce qui lui permet de rester concentré sur d'autres occupations ou loisirs.

L'intention de stationnement du premier véhicule 10 peut également être déclenchée par une commande représentative de la volonté d'un utilisateur du véhicule, par exemple un conducteur du véhicule.

Par exemple, l'utilisateur du premier véhicule 10 peut indiquer son intention de stationner son véhicule par appui sur une commande située sur une interface tactile. Il peut également indiquer son intention de stationner par appui sur un bouton dédié.

Dans un autre exemple, l'utilisateur du premier véhicule 10 peut indiquer son intention de stationner son véhicule par commande vocale.

De cette manière, l'utilisateur peut communiquer son intention de stationner son véhicule de manière simple et efficace, avec un effort moindre. De cette manière, la charge mentale de l'utilisateur est réduite.

Dans une deuxième étape 41 du procédé, le côté de la voie de stationnement où une place de stationnement est à chercher est déterminée.

Par exemple, le capteur frontal 20 du véhicule est relié à un calculateur qui permet de reconnaître les marquages au sol comme étant représentatifs d'une zone de stationnement 2.

Dans un autre exemple, le capteur frontal 20 du véhicule est relié à un calculateur qui permet d'identifier plusieurs véhicules 12, 13, 14 stationnés en file indienne sur une voie, et identifie donc cette voie comme étant une voie de stationnement 2.

Dans une troisième étape 42 du procédé, le premier véhicule 10 active un clignotant du côté de la voie de stationnement déterminée à l'étape précédente.

De cette manière, le premier véhicule 10 indique à un éventuel véhicule qui le suit qu'il recherche une place de stationnement. Ainsi le deuxième véhicule 11, encore désigné véhicule suiveur, est prévenu suffisamment en avance. Il a ainsi toute latitude pour dépasser le premier véhicule 10 ou pour s'arrêter en toute sécurité.

Dans une quatrième étape 43 du procédé, le premier véhicule 10 réduit sa vitesse de circulation.

Par exemple, le premier véhicule 10, qui roulait à une première vitesse V1 comprise entre 30 et 50 km/h, réduit sa vitesse jusqu'à une vitesse comprise entre 15 et 20km/h.

A partir des informations transmises par le capteur frontal 20 au calculateur, le premier véhicule 10 peut détecter la présence d'une place de stationnement sur la voie de stationnement 2. Par exemple, un espace d'une longueur supérieure à celle du premier véhicule 10 est vacant sur la voie de stationnement 2.

Dans cette configuration, le premier véhicule 10 réduit la distance entre la voie de stationnement 2 et lui-même.

Ce rapprochement latéral indique à un éventuel véhicule qui le suit qu'il va entamer sa manœuvre de stationnement.

Par la suite, le premier véhicule 10 s'immobilise en aval de la place de stationnement libre sur la voie de stationnement 2. Autrement dit, le premier véhicule 10 dépasse la place de stationnement et s'immobilise juste après.

Dans le cas présent, l'amont et l'aval sont définis relativement au sens de circulation du premier véhicule 10.

Selon un mode de réalisation particulier de l'invention, la troisième étape 42 du procédé, consistant à activer un clignotant du premier véhicule 10, est conditionnée à une présence 35 d'un deuxième véhicule 11 dit véhicule suiveur. Indépendamment de la condition de la présence 35 d'un deuxième véhicule 11, la troisième étape 42 du procédé consistant à activer un clignotant du premier véhicule 10 pourra être déclenchée à la suite de la détection d'une place de stationnement libre sur la voie de stationnement 2 déterminée. On pourra également prévoir que l'activation d'un clignotant du premier véhicule 10 soit conditionnée à la fois par la présence 35 d'un deuxième véhicule 11 et par la détection d'une place de stationnement libre sur la voie de stationnement 2 déterminée. Au plus tard, l'activation d'un clignotant du premier véhicule 10 sera réalisée lorsque le premier véhicule 10 enclenche la marche arrière.

La présence 35 d'un deuxième véhicule 11 dit véhicule suiveur peut être déterminée à partir des informations transmises par le capteur arrière 21 au calculateur.

Selon un mode de réalisation particulier de l'invention, la troisième étape 42 du procédé, consistant à activer un clignotant du premier véhicule 10 est conditionnée au fait que le deuxième véhicule 11 ne peut pas dépasser le premier véhicule 10. Indépendamment de la condition de la possibilité de dépassement du premier véhicule 10 par le deuxième véhicule 11, la troisième étape 42 du procédé consistant à activer un clignotant du premier véhicule 10 pourra être déclenchée à la détection d'une place de stationnement libre sur la voie de stationnement 2 déterminée. On pourra également prévoir que l'activation d'un clignotant du premier véhicule 10 soit conditionnée à la fois par la possibilité de dépassement du premier véhicule 10 par le deuxième véhicule 11 et par la détection d'une place de stationnement libre sur la voie de stationnement 2 déterminée. Au plus tard, l'activation d'un clignotant du premier véhicule 10 sera réalisée lorsque le premier véhicule 10 enclenche la marche arrière.

Par exemple, la voie de circulation 1 peut être une voie à sens unique avec une seule voie de circulation.

La voie de circulation 1 peut être une voie à double sens. Des véhicules circulant dans la voie adjacente empêchent le deuxième véhicule 11 de dépasser le premier véhicule 10.

Le capteur frontal 20, le capteur arrière 21, l'interface véhicule et une mémoire associée à un processeur configuré pour mettre en œuvre le procédé sont intégrées dans un dispositif d'aide au stationnement pour véhicule.

La présente invention concerne également un programme d'ordinateur qui comporte des instructions adaptées pour l'exécution des étapes du procédé, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un autre aspect, la présente invention concerne un support d'enregistrement lisible par un ordinateur sur lequel est enregistré un programme d'ordinateur comprenant des instructions pour l'exécution des étapes du procédé de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

## Revendications

1. Procédé d'aide au stationnement d'un premier véhicule (10), ce premier véhicule (10) étant de type véhicule autonome et circulant sur une voie de circulation (1) à une première vitesse (V1), une voie de stationnement (2) étant située d'un côté de la voie de circulation (1), ledit procédé étant mis en œuvre par un processeur et comportant les étapes de :
a) Détermination (40) d'une intention de stationnement du premier véhicule (10) ;
b) Détermination (41) du côté de la voie de stationnement (2) où une place de stationnement est à chercher ;
c) Activation (42) d'un clignotant du premier véhicule (10) du côté de la voie de stationnement (2) déterminée ;
d) Réduction (43) de la première vitesse (V1) de circulation du premier véhicule (10).

2. Procédé selon la revendication 1, dans lequel l'intention de stationnement du premier véhicule (10) est déclenchée par une commande représentative de la volonté d'un utilisateur du véhicule.

3. Procédé selon la revendication 2, dans lequel la commande représentative de la volonté d'un utilisateur du véhicule est de type commande sur une interface tactile ou commande vocale.

4. Procédé selon l'une des revendications précédentes, comportant en outre les étapes suivantes :
- Détection d'une place de stationnement libre sur la voie de stationnement (2) déterminée;
- Rapprochement latéral du premier véhicule (10) vers la voie de stationnement (2) ;
- Immobilisation du premier véhicule (10) en aval de la place de stationnement libre sur la voie de stationnement (2).

5. Procédé selon les revendications 1 et 4, dans lequel l'étape c) d'activation (42) d'un clignotant du premier véhicule (10) est conditionnée à une présence (35) d'un deuxième véhicule (11) dit véhicule suiveur et/ou à la détection d'une place de stationnement libre sur la voie de stationnement (2) déterminée.

6. Procédé selon la revendication 5, dans lequel l'étape c) d'activation (42) d'un clignotant du premier véhicule (10) est conditionnée au fait que le deuxième véhicule (11) ne peut pas dépasser le premier véhicule (10) et/ou à la détection d'une place de stationnement libre sur la voie de stationnement (2) déterminée.

7. Programme d'ordinateur comportant des instructions pour la mise en œuvre du procédé selon l'une quelconque des revendications précédentes, lorsque ces instructions sont exécutées par un processeur.

8. Dispositif d'aide au stationnement d'un véhicule comprenant :
- un capteur frontal (20),
- un capteur arrière (21),
- une interface véhicule,
- une mémoire associée à un processeur configuré pour mettre en œuvre le procédé selon l'une des revendications1 à 6.

9. Dispositif selon la revendication 8, dans lequel le capteur frontal (20) ou le capteur arrière (21) est un capteur LIDAR ou une caméra ou un radar.

10. Véhicule (10) comportant un dispositif selon la revendication 8 ou la revendication 9.
